# EUROPEAN PATENT APPLICATION

(11) **EP 0 638 989 A1**
(43) Date of publication of application: **15.02.1995**
(21) Application number: 93306291.1
(22) Date of filing: 10.08.1993
(51) Int. Cl.: H02P 7/12, H02P 7/28

(54) **Motor control circuit for series or compound starting and shunt normal running**

(71) Applicant: Yang, Tai-Her, Si-Hu Town Dzan-Hwa (TW)
(72) Inventor: Yang, Tai-Her, Si-Hu Town Dzan-Hwa (TW)
(74) Representative: Arthur, Bryan Edward

(57) **Abstract**

The present motor control circuit for series or compound starting shunt normal running relates to reach shunt operation with high efficiency and low loss under normal operation, and apply series or compound for starting or overload operation in order to obtain excellent starting or overload operation.

## Description

### SUMMARY OF THE INVENTION

The present motor control circuit for series or compound starting shunt normal running relates to reach shunt operation with high efficiency and low loss under normal operation, and apply series or compound for starting or overload operation in order to obtain excellent starting or overload operation.

### BRIEF DESCRIPTION OF THE DRAWINGS

FIG. 1 is a diagram showing the structure of motor control circuit for series or compound starting shunt normal running.

FIG. 2 is an embodiment showing the present motor control circuit for series or compound starting shunt normal running consisted of C contact point switch.

FIG. 3 is another embodiment showing the present motor control circuit for series or compound starting shunt normal running consisted of C contact point switch.

FIG. 4 is an embodiment showing present motor control circuit for series or compound starting shunt normal running consisted of auxiliary field winding.

### DETAILED DESCRIPTION OF THE INVENTION

The conventional series or compound motor often has excellent starting and overload characteristics, in other words having better current against moment, however its normal operation efficiency is inferior due to the drop of series field; while shunt motor is on the contrary, in other words, its efficiency is good under normal operation but current is too big during starting and overload. The present motor control circuit for series or compound starting shunt normal running relates to reach shunt operation with high efficiency and low loss under normal operation, and apply series or compound for starting or overload operation in order to obtain excellent starting or overload operation.

The principle and structure of the circuit according to the present invention is described together with accompanying drawings below:

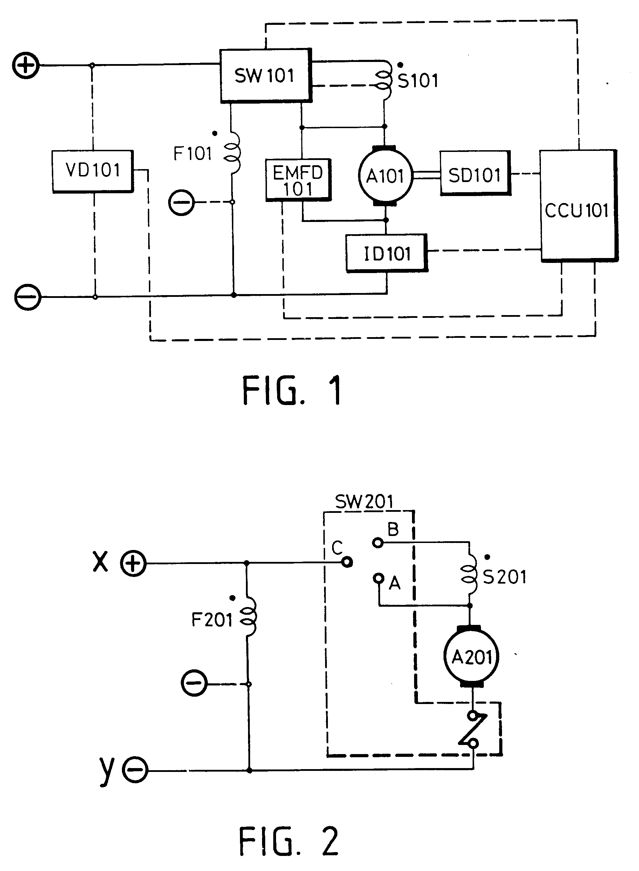

FIG. 1 is a diagram showing the structure of motor control circuit for series or compound starting shunt normal running, including:
a series motor consisted of the series field winding S101 having intermediate tap series with armature A101, or further including a shunt winding F101 having common power supply with other windings (or having independent power supply) to enable the motor to appear compound type by virtue of control by switch device SW101;
a relay operated by motor centrifugal force or driven by current, or electromechanical or solid state switch device SW101 controlled by CCU101, the switch device SW101 is provided to enable the motor to appear series or compound starting while to enable the motor to appear shunt wiring state under normal operation, or switch to the position of intermediate tap of series field winding in order to obtain intermediate characteristics;
the circuit itself may be added motor speed detector SD101 or armature current detector ID101 or armature electric motive force detector EMFD101 for analogical or digital detecting motor speed or current or armature electric motive force and sending it to CCU101 in order to control the switch device for series or compound starting and parallel connecting for normal operation;
CCU101 can be provided to define current value or speed value or armature EMF value for switching the motor from series or compound starting or overload state into shunt normal operation;
the system including single rated armature voltage state may further be applied to compound voltage driving armature system, and particularly if armature or shunt field power supply voltage is variable compound voltage driving, power voltage and the speed, armature current value or EMF value can be transmitted to CCU101 by virtue of voltage detector VD101 parallel connected to the power supply in order to modify various reference values for switch in accordance with the change in power voltage input.

FIG. 2 is an embodiment showing the present motor control circuit for series or compound starting shunt normal running consisted of C contact point switch, including:
a series field winding S201, after series with armature A201, one end of armature is leading to the power supply Y while the series field winding S201 and connection end of armature A201 are leading to the contact point A of C contact point switch, and the contact point A and C contact point both appear closed under normal operation; the other end of series field winding S201 is leading to the contact point B of C contact point switch;
the joint contact point C of C contact point switch SW201 is leading to the power supply X, C contact point switch current active type relay series with armature or driven by centrifugal force or driven by armature EMF drive type relay; contact points C and B are communicated during start or overload, while contact points C and A are communicated during normal operation;
the shunt field winding F201 parallel connected between the power supplies X and Y (or having independent power supply) and the motor will appear shunt during normal operation by virtue of changeover of C contact point switch after starting and appear compound wiring during starting and overload.

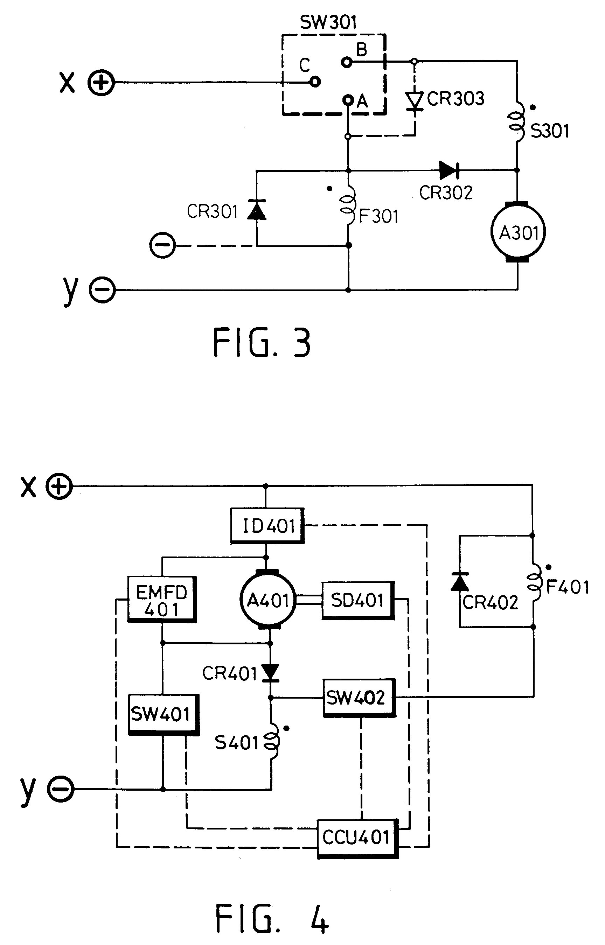

FIG. 3 is another embodiment showing the present motor control circuit for series or compound starting shunt normal running consisted of C contact point switch, including:
the series field winding S301 series with armature A301, the end of armature A301 is leading to the power supply Y while a diode CR302 is mounted between the contact point of series field winding S301 and armature A301 and the normal open contact point A of C contact point switch SW301 so that current is leading from contact point A to the armature A301 during normal operation; the other end of series field winding S301 is leading to the normal close contact point B of C contact point switch;
the joint contact point C of C contact point switch SW301 is leading to the power supply X, C contact point switch can be driven by centrifugal force or current active relay series with armature or driven by armature EMF drive type relay; contact points C and B are communicated during
the joint contact point C of C contact point switch SW201 is leading to the power supply X, C contact point switch current active type relay series with armature or driven by centrifugal force or driven by armature EMF drive type relay; contact points C and B are communicated during start or overload, while contact points C and A are communicated during normal operation;
the shunt field winding F201 parallel connected between the power supplies X and Y (or having independent power supply) and the motor will appear shunt during normal operation by virtue of changeover of C contact point switch after starting and appear compound wiring during starting and overload.

FIG. 3 is another embodiment showing the present motor control circuit for series or compound starting shunt normal running consisted of C contact point switch, including:
the series field winding S301 series with armature A301, the end of armature A301 is leading to the power supply Y while a diode CR302 is mounted between the contact point of series field winding S301 and armature A301 and the normal open contact point A of C contact point switch SW301 so that current is leading from contact point A to the armature A301 during normal operation; the other end of series field winding S301 is leading to the normal close contact point B of C contact point switch;
the joint contact point C of C contact point switch SW301 is leading to the power supply X, C contact point switch can be driven by centrifugal force or current active relay series with armature or driven by armature EMF drive type relay; contact points C and B are communicated during start or overload, while contact points C and A are communicated during normal operation;
the shunt field winding F301 parallel connected between the normal open contact point A of C contact point switch and ground wire Y (or having independent power supply controlled by the contact point A), and CR301 is flywheel diode; the motor will appear shunt during normal operation by virtue of changeover of C contact point switch after starting and appear series during starting and overload; further a diode CR303 can be positively series between the contact point A of C contact point switch and the contact point B, then motor will appear compound wiring during starting or overload.

FIG. 4 is an embodiment showing present motor control circuit for series or compound starting shunt normal running consisted of auxiliary field winding, including:
armature A401 and current detector ID401 and diode CR401 series, then series with the series field winding S401 and finally parallel connected to the power supply, and the diode CR401 is connected between the armature A401 and series field winding S401;
the switch SW401 parallel connected between the output end of series field winding S401 and contact point of armature A401 and diode CR401; the other switch SW402 synchronously driven with SW401 is parallel connected to the contact point of diode CR401 and series field winding S401, and the tail and head ends of shunt field F401 of same polarity as the series field together with the end of detector ID401 are leading to the positive end X of power supply, and the flywheel diode CR402 is parallel connected to both ends of shunt field F401;
CCU401 can accept input signal from motor armature current detector ID401 or motor speed detector SD401 or armature electric motive force detector EMFD401 to compare with setting value in order to turn ON the switch SW401 and SW402 to enable motor to appear parallel normal operation, and turn them OFF to appear series start or overload operation.

Referring to above-said embodiments, the contact point device of C contact point switch may be replaced by 2A 2B or 1A 1B, and each detector may be mounted subject to requirement. The spirit of the present invention lies in: (1) normal shunt running (2) changeover to series or compound wiring during starting and overload (3) changeover to driven by centrifugal force, current drive relay or controlled by the control center unit with reference to the comparison among the armature voltage, motor speed and setting changeover point; its compatibility or substitute circuit will not be described herein.

To conclude the above statement, the improvement for the motor control circuit for series or compound starting, shunt normal running by virtue of auxiliary field winding may enable DC motor to obtain better starting and overload characteristics from series or compound wiring, and to achieve high efficiency of shunt wiring during normal operation. The design is novel with definite effectiveness, please examine it in accordance with the law.

## Claims

1. A motor control circuit for series or compound starting shunt normal running to reach shunt operation with high efficiency and low loss under normal operation, and apply series or compound for starting or overload operation in order to obtain excellent starting or overload operation, including:
a series motor consisted of the series field winding S101 having intermediate tap series with armature A101, or further including a shunt winding F101 having common power supply with other windings (or having independent power supply) to enable the motor to appear compound type by virtue of control by switch device SW101;
a relay operated by motor centrifugal force or driven by current, or electromechanical or solid state switch device SW101 controlled by CCU101, the switch device SW101 is provided to enable the motor to appear series or compound starting while to enable the motor to appear shunt wiring state under normal operation, or switch to the position of intermediate tap of series field winding in order to obtain intermediate characteristics;
the circuit itself may be added motor speed detector SD101 or armature current detector ID101 or armature electric motive force detector EMFD101 for analogical or digital detecting motor speed or current or armature electric motive force and sending it to CCU101 in order to control the switch device for series or compound starting and parallel connecting for normal operation;
CCU101 can be provided to define current value or speed value or armature EMF value for switching the motor from series or compound starting or overload state into shunt normal operation;
the system including single rated armature voltage state may further be applied to compound voltage driving armature system, and particularly if armature or shunt field power supply voltage is variable compound voltage driving, power voltage and the speed, armature current value or EMF value can be transmitted to CCU101 by virtue of voltage detector VD101 parallel connected to the power supply in order to modify various reference values for switch in accordance with the change in power voltage input.

2. The motor control circuit for series or compound starting shunt normal running according to claim 1, further may be consisted of C contact point switch, including:
a series field winding S201, after series with armature A201, one end of armature is leading to the power supply Y while the series field winding S201 and connection end of armature A201 are leading to the contact point A of C contact point switch, and the contact point A and C contact point both appear closed under normal operation; the other end of series field winding S201 is leading to the contact point B of C contact point switch;
the joint contact point C of C contact point switch SW201 is leading to the power supply X, C contact point switch current active type relay series with armature or driven by centrifugal force or driven by armature EMF drive type relay; contact points C and B are communicated during start or overload, while contact points C and A are communicated during normal operation;
the shunt field winding F201 parallel connected between the power supplies X and Y (or having independent power supply) and the motor will appear shunt during normal operation by virtue of changeover of C contact point switch after starting and appear compound wiring during starting and overload.

3. The motor control circuit for series or compound starting shunt normal running according to claim 1, further may be consisted of C contact point switch, including:
the series field winding S301 series with armature A301, the end of armature A301 is leading to the power supply Y while a diode CR302 is mounted between the contact point of series field winding S301 and armature A301 and the normal open contact point A of C contact point switch SW301 so that current is leading from contact point A to the armature A301 during normal operation; the other end of series field winding S301 is leading to the normal close contact point B of C contact point switch;
the joint contact point C of C contact point switch SW301 is leading to the power supply X, C contact point switch can be driven by centrifugal force or current active relay series with armature or driven by armature EMF drive type relay; contact points C and B are communicated during start or overload, while contact points C and A are communicated during normal operation;
the shunt field winding F301 parallel connected between the normal open contact point A of C contact point switch and ground wire Y (or having independent power supply controlled by the contact point A), and CR301 is flywheel diode; the motor will appear shunt during normal operation by virtue of changeover of C contact point switch after starting and appear series during starting and overload; further a diode CR303 can be positively series between the contact point A of C contact point switch and the contact point B, then motor will appear compound wiring during starting or overload.

4. The motor control circuit for series or compound starting shunt normal running according to claim 1, further may be consisted of auxiliary field winding, including:
armature A401 and current detector ID401 and diode CR401 series, then series with the series field winding S401 and finally parallel connected to the power supply, and the diode CR401 is connected between the armature A401 and series field winding S401;
the switch SW401 parallel connected between the output end of series field winding S401 and contact point of armature A401 and diode CR401; the other switch SW402 synchronously driven with SW401 is parallel connected to the contact point of diode CR401 and series field winding S401, and the tail and head ends of shunt field F401 of same polarity as the series field together with the end of detector ID401 are leading to the positive end X of power supply, and the flywheel diode CR402 is parallel connected to both ends of shunt field F401;
CCU401 can accept input signal from motor armature current detector ID401 or motor speed detector SD401 or armature electric motive force detector EMFD401 to compare with setting value in order to turn ON the switch SW401 and SW402 to enable motor to appear parallel normal operation, and turn them OFF to appear series start or overload operation.

5. The motor control circuit for series or compound starting shunt normal running according to claim 1, the switch device including the construction by C contact point switch and the contact point device of C contact point switch may be replaced by 2A 2B or 1A 1B.
